Europäisches Patentamt

(19) European Patent Office

Office européen des brevets

(11) Veröffentlichungsnummer: **0 027 872**
**B1**

(12) **EUROPÄISCHE PATENTSCHRIFT**

(45) Veröffentlichungstag der Patentschrift:
**12.01.83**

(21) Anmeldenummer: **80105079.0**

(22) Anmeldetag: **27.08.80**

(51) Int. Cl.³: **C 10 B 27/00**

(54) **Verfahren zum Betrieb einer Koksofenbatterie.**

(30) Priorität: **24.10.79 DE 2942962**
**06.12.79 DE 2949016**

(43) Veröffentlichungstag der Anmeldung:
**06.05.81 Patentblatt 81/18**

(45) Bekanntmachung des Hinweises auf die Patenterteilung:
**12.01.83 Patentblatt 83/2**

(84) Benannte Vertragsstaaten:
**BE DE FR GB NL SE**

(56) Entgegenhaltungen:
**DE-C-801 274**
**US-A-4 157 940**

(73) Patentinhaber: **Krupp-Koppers GmbH, Moltkestrasse 29, D-4300 Essen 1 (DE)**

(72) Erfinder: **Polenz, Joachim, Dipl.-Ing., Weissenburgstrasse 9/11, D-4300 Essen 1 (DE)**
Erfinder: **Wagner, Hans, Schmachtenbergstrasse 99, D-4307 Kettwig (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zum Betrieb einer Koksofenbatterie

Die Erfindung betrifft ein Verfahren zum Betrieb einer Koksofenbatterie mit waagerechten Kammern, bei dem die während des Füllvorganges entweichenden Füllgase getrennt vom Produktionsgas abgezogen und nach Abscheidung der in ihnen enthaltenen Feststoffteilchen und Teerbestandteile dem rohen Koksofengas zugemischt werden.

Es ist bekannt, dass die Behandlung der während des Füllvorganges aus den Ofenkammern entweichenden Füllgase wegen der immer schärfer werdenden Umweltschutzbestimmungen ein schwerwiegendes Problem darstellt. Verstärkt wird dieses Problem noch dadurch, dass in neuerer Zeit im steigenden Masse die Tendenz besteht, die Ofenkammern anstelle mit normaler, d.h. feuchter Kohle, mit vorerhitzter Kohle zu beschicken. Dadurch werden jedoch die Füllgasmenge und der Staubgehalt des Füllgases nicht unwesentlich erhöht. Es hat deshalb bereits in der Vergangenheit nicht an Vorschlägen gefehlt, das Problem der Füllgasabsaugung und -behandlung in den Griff zu bekommen. So ist es in Verfolgung dieses Zieles bereits bekannt, die Füllgase in einer direkt auf dem Füllwagen installierten Verbrennungseinrichtung zu verbrennen. Diese Methode stösst jedoch aus Gründen des Umweltschutzes und der Betriebssicherheit im zunehmenden Umfange auf Schwierigkeiten. Es ist ferner bereits vorgeschlagen worden, die Füllgase getrennt vom Produktionsgas, d.h. vom rohen Koksofengas, über eine separate Füllgasleitung abzuziehen und nach entsprechender Entstaubung und Entteerung entweder in die Ofenkammern zurückzuleiten oder dem rohen Koksofengas zuzusetzen. Die Füllgasreinigung kann dabei entweder auf trockenem (Zyklonabscheider/Elektrofilter) oder auf nassem Wege (Wascher) erfolgen. Es liegt jedoch auf der Hand, dass gesonderte Einrichtungen zur Füllgasreinigung einen zusätzlichen Investitions- und Betriebskostenaufwand verursachen. Beim Einsatz von Waschern für diesen Zweck muss ausserdem die aus diesen ablaufende Waschflüssigkeit, in der die Staub- und Teerbestandteile des Füllgases niedergeschlagen wurden, in einem Abscheider gereinigt werden, bevor die Waschflüssigkeit zur erneuten Behandlung der Füllgase im Wascher eingesetzt werden kann.

Der Erfindung liegt deshalb die Aufgabe zugrunde, das Verfahren der eingangs beschriebenen Art dahingehend zu verbessern, dass der Investitions- und Betriebskostenaufwand für die Reinigung der Füllgase deutlich verringert wird. Ausserdem sollen die Betriebssicherheit und die Umweltfreundlichkeit verbessert werden und das erfindungsgemässe Verfahren soll unabhängig davon einsetzbar sein, ob feuchte oder vorgetrocknete Kohle zum Einsatz gelangt.

Das der Lösung dieser Aufgabe dienende Verfahren ist dadurch gekennzeichnet, dass die Füllgase durch Zumischen von Rauchgas inertisiert, über eine mit Spülwasser aus der Koksofengasvorlage beschickte Füllgasleitung abgezogen werden und anschliessend das resultierende Füllgas-Rauchgas-Gemisch dem rohen Koksofengas hinter der Koksofengasvorlage zugemischt wird, während das aus der Füllgasleitung ablaufende teer- und kohlehaltige Spülwasser in einen Dickteerscheider eingeleitet und nach erfolgter Teerabscheidung zur Koksofengasvorlage zurückgeführt wird.

Das heisst, beim erfindungsgemässen Verfahren wird das Füllgas zum Zwecke der erforderlichen Betriebssicherheit zunächst durch Rauchgaszugabe inertisiert, wobei vorzugsweise Rauchgas aus dem Abhitzekanal der Koksofenbatterie zur Anwendung gelangt. Die Rauchgaszufuhr kann dabei in geeigneter Weise, vorzugsweise über die Planiertür in die Ofenkammer und/oder in die Absaugehaube des Füllwagens und/oder direkt in die Füllgasleitung erfolgen. Die Rauchgasmenge wird so bemessen, dass in dem resultierenden Füllgas-Rauchgas-Gemisch der Zündbereich auf Null verkleinert wird und somit die obere und die untere Zündgrenze zusammenfallen. Dieses Gemisch kann deshalb auch durch eine erhöhte Luftzufuhr nicht mehr zur Zündung gebracht werden. Es hat sich gezeigt, dass für die Inertisierung des Füllgases in Abhängigkeit vom Restsauerstoffgehalt eine Rauchgasmenge von etwa 10 bis 20 Nm$^3$ Rauchgas pro Nm$^3$ Füllgas erforderlich ist.

Das inertisierte Gasgemisch wird über eine Füllgasleitung abgezogen, die erfindungsgemäss mit Spülwasser von der Koksofengasvorlage beschickt wird, wobei die aufgegebene Spülwassermenge vorzugsweise 10 bis 15 Liter pro Nm$^3$ Füllgas-Rauchgas-Gemisch beträgt. Dieses Vorlagespülwasser, das ja stets einen gewissen NH$_3$-Gehalt aufweist, dient einerseits dazu, die Bildung von Teer- und Kohleablagerungen in der Füllgasleitung zu vermeiden und andererseits, gleichzeitig diese Bestandteile aus dem Füllgas-Rauchgas-Gemisch zum Teil niederzuschlagen. Die Füllgasleitung wird dabei mit einem leichten Gefälle verlegt, so dass das bei der Gasbehandlung anfallende teer- und kohlehaltige Spülwasser in einen Dickteerscheider abfliessen kann. Vorzugsweise wird hierfür der bereits vorhandene Dickteerscheider des Koksofengasbehandlungsprozesses mitverwendet. Von hier aus kann die Spülflüssigkeit, nachdem die Teerabscheidung in der dafür vorgesehenen Art und Weise erfolgt ist, zur Koksofengasvorlage zurückgeführt werden.

Für den Abzug der Füllgase aus der Koksofenbatterie zur Füllgasleitung bestehen verschiedene Möglichkeiten:

Es ist möglich, dass die Füllgase aus der Koksofenbatterie über die Absaughaube des Füllwagens abgezogen werden, wobei die Füllgasleitung als sogenannte Andockleitung, das heisst mit Anschluss-Stutzen versehene Leitung, ausgebildet ist. Die Anschluss-Stutzen befinden sich dabei in entsprechender Position über den Füllöchern der Koksofenbatterie, so dass die Absaughaube des Füllwagens in jeder Stellung des Füllwagens einen entsprechenden Anschluss-Stutzen in der Andockleitung vorfindet. Selbstverständlich kann das Problem der Verbindung zwischen der Absaugehaube des Füllwagens und der Füllgasleitung aber auch auf andere Art und Weise gelöst werden, z.B. durch eine flexible Verbindungsleitung.

Ferner kann der Abzug der Füllgase über das vorhandene Steigrohr der Koksofenbatterie erfolgen, das in diesem Falle mit einer Umschaltvorrichtung versehen ist. Diese wird während des Abzuges der Füllgase so eingestellt, dass dieselben nicht in die Koksofengasvorlage gelangen können, sondern tatsächlich über eine hierfür vorgesehene Leitung zur Füllgasleitung strömen.

Schliesslich ist es auch möglich, den Abzug der Füllgase über eine zusätzliche Öffnung in der Ofendecke der Koksofenbatterie vorzunehmen, die über eine mit einem Ventil versehene Leitung mit der Füllgasleitung direkt in Verbindung steht. Da die zusätzliche Öffnung zum Abzug der Füllgase normalerweise nicht in der Ofendecke der Koksofenbatterie vorhanden ist, eignet sich diese Ausführungsform vor allem für Neuanlagen, bei denen diese Öffnung von vornherein vorgesehen werden kann.

Nachfolgend sollen die verschiedenen Ausführungsformen des erfindungsgemässen Verfahrens anhand der in den Abbildungen wiedergegebenen vereinfachten schematischen Darstellungen erläutert werden. Diese enthalten lediglich die für die Erklärung der Erfindung notwendigen Einrichtungen, während alle übrigen Einrichtungen der Koksofenbatterie und des Koksofengasbehandlungsprozesses nicht dargestellt sind.

Es zeigen:

Fig. 1 die Ausführungsform, bei der die Füllgase über die Absaughaube des Füllwagens und eine sogen. Andockleitung abgezogen werden, wobei diese Ausführungsform gleichzeitig als Verfahrensbeispiel dient;

Fig. 2 die Ausführungsform, bei der die Füllgase über das mit einer Umschaltvorrichtung versehene Steigrohr aus der Koksofenbatterie abgezogen werden und

Fig. 3 die Ausführungsform, bei der der Abzug der Füllgase durch eine zusätzliche Öffnung in der Ofendecke erfolgt. Gleichzeitig soll in diesem Falle eine Nachbehandlung des anfallenden Füllgas-Rauchgas-Gemisches in einem mit Spülwasser beaufschlagten Wascher durchgeführt werden.

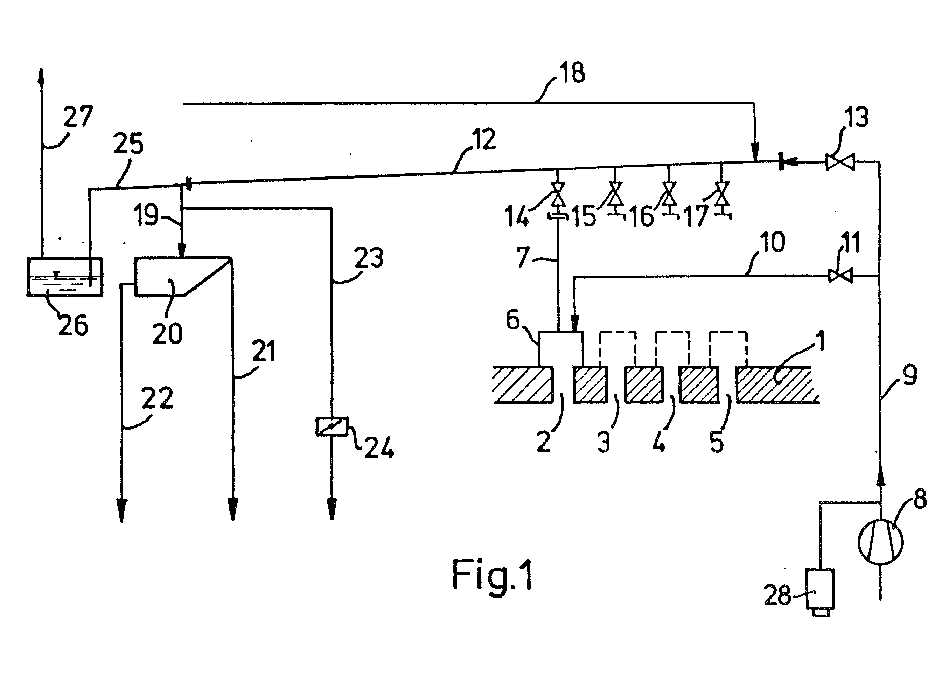

In der Abbildung in Fig. 1 wird die Ofendecke der Koksofenbatterie mit 1 bezeichnet. In dieser befinden sich die Füllöcher 2 bis 5. Je nach dem Stand des Füllvorganges befindet sich dabei die Absaughaube 6 des nicht näher dargestellten Füllwagens über einem der Füllöcher.

In der Abbildung in Fig. 1 ist dies das Füllloch 2, während die Position der Absaughaube 6 über den Füllöchern 3 bis 5 durch unterbrochene Linien angedeutet ist. Insgesamt entweichen während des Füllvorganges pro Minute ca. 5 bis 15 Nm³ trockenes Füllgas. Es ist zu berücksichtigen, dass während des Füllvorganges mit nasser Kohle durch die Planiertür des Füllwagens etwas Luft in den Gassammelraum der jeweiligen Ofenkammer gelangen kann, so dass dort eine gewisse Teilverbrennung der sich entwickelnden Füllgase mit starkem Luftunterschuss stattfindet. Damit während des Füllvorganges nicht unnötig Luft duch den Ringspalt zwischen dem Füllrohr und dem Füllloch in die Absaughaube 6 eindringt, steht diese unter Rauchgas-Überdruck. Das sich unter der Absaughaube 6 während des Füllvorganges sammelnde Füllgas hat in etwa folgende Zusammensetzung:

| | |
|---|---|
| $CO_2$ | 3,5 Vol.-% |
| CnHm | 5,0 Vol.-% |
| CO | 6,9 Vol.-% |
| $H_2$ | 40,0 Vol.-% |
| $CH_4$ | 41,7 Vol.-% |
| $N_2$ | 2,9 Vol.-% |

Dieses Gas wird zusammen mit eventuell vorhandener Luft sowie teilweise verbranntem Füllgas und Rauchgas über die Leitung 7 aus der Absaughaube 6 abgezogen. Zum Zwecke der vollständigen Inertisierung muss die in diesem Falle insgesamt zugegebene Rauchgasmenge ca. 15 Nm³ Rauchgas pro Nm³ Füllgas betragen. Das benötigte Rauchgas wird vom Abhitzekanal der Koksofenbatterie vermittels des Gebläses 8 über die Leitung 9 abgezogen. Es könnte aber gegebenenfalls auch in einem separaten Rauchgaserzeuger 28 hergestellt werden. Von der Leitung 9 zweigt die Leitung 10 ab, die zur Absaughaube 6 führt, so dass bei entsprechender Stellung des Ventils 11 das Rauchgas im erforderlichen Umfange dem Füllgas noch unter der Absaughaube 6 zugemischt werden kann. Die Leitung 9 hat ausserdem Anschluss an die Füllgasleitung 12, so dass das Rauchgas bei entsprechender Stellung des Ventils 13 dem Füllgas auch erst in der Füllgasleitung 12 zugemischt werden kann. Selbstverständlich lassen sich die Ventile 11 und 13 auch so einregulieren, dass eine Rauchgaszugabe sowohl in der Absaughaube 6 als auch in der Füllgasleitung 12 erfolgt.

Die Füllgasleitung 12 ist in diesem Falle, wie in der Abbildung angedeutet ist, als sogenannte Andockleitung ausgebildet und mit den Anschluss-Stutzen 14 bis 17 versehen, die sich in entsprechender Position über den Füllöchern 2 bis 5 befinden, so das die Absaughaube 6 in jeder Stellung des Füllwagens einen entsprechenden Anschluss-Stutzen in der Füllgasleitung 12 vorfindet.

Erfindungsgemäss werden über die Leitung 18 ca. 10 bis 15 Liter Spülwasser pro Nm³ Füllgas-Rauchgas-Gemisch auf die Füllgasleitung 12 aufgegeben. Dieses Spülwasser, welches von der nicht dargestellten Koksofengasvorlage kommt, enthält etwa 6 kg $NH_3/m^3$. Durch die Spülwasserzugabe wird die Temperatur des Gasgemisches in der Füllgasleitung 12 auf etwa 80°C herabgesetzt. Da diese Leitung mit einem Gefälle von etwa 10 mm/m verlegt worden ist, fliesst das sich am Boden ansammelnde teer- und kohlehaltige Spülwasser über das Verbindungsstück 19 in den sogen. Dickteerscheider 20. Hierbei kann es sich um eine bekannte Konstruktion mit Kratzbandförderer handeln, so dass der sogenannte Dickteer am Oberteil des Dickteerscheiders 20 ausgetragen wird und über die Leitung 21 abgezogen werden kann. Das Spülwasser und der übrige Teer gelangen währenddessen über die Leitung 22 zum nicht dargestellten Kondensattiefbehälter des Koksofengasbehandlungsprozesses. Nach erfolgter Phasenscheidung und Abtrennung vom Teer kann das Spülwasser sodann in an sich bekannter Weise zur nicht dargestellten Koksofenvorlage zurückgeführt werden und steht damit zur Wiederaufgabe auf die Füllgasleitung 12 zur Verfügung.

Das von den teer- und kohlehaltigen Verunreinigungen weitgehend befreite Füllgas-Rauchgas-Gemisch wird währenddessen über die Leitung 23 abgezogen. Dieses Gasgemisch wird während des Füllvorganges mit einer Temperatur von ca. 70°C dem rohen Koksofengas hinter der Koksofengasvorlage zugemischt. Sofern sich die normalerweise geforderte Temperatur zwischen 40 und 70°C nicht bereits beim Eintritt in die Leitung 23 eingestellt hat, kann die Temperatur des Gasgemisches in einer nicht dargestellten Kühleinrichtung entsprechend abgesenkt werden.

In der Leitung 23 ist die Drosselklappe 24 angeordnet, die während der Füllpausen, das heisst der Zeiten, in denen der Füllvorgang unterbrochen und der Füllwagen von einem Füllloch zum anderen transportiert wird, geschlossen ist. Damit der Inertgasdruck im System auch während dieser Zeit aufrechterhalten wird, erfolgt während der Füllpausen jedoch keine Unterbrechung der Rauchgaszufuhr. Das Gas aus der Füllgasleitung 12 gelangt während dieser Zeit vielmehr über das Leitungsstück 25 in den Tauchtopf 26 und kann von dort über die Leitung 27 in den nicht dargestellten Abhitzekanal und den Kamin abgezogen werden.

Durch die Zumischung des Füllgas-Rauchgas-Gemisches während der Füllzeit zum rohen Koksofengas wird dessen Heizwert um ca. 2 bis 5% erniedrigt. Es hat sich jedoch gezeigt, dass diese Herabsetzung des Heizwertes keine Beeinträchtigung der Verwertungsmöglichkeiten für das resultierende Gasgemisch darstellt. Dies gilt insbesondere dann, wenn dasselbe innerhalb der Wärmewirtschaft eines Hüttenwerkes verwertet wird.

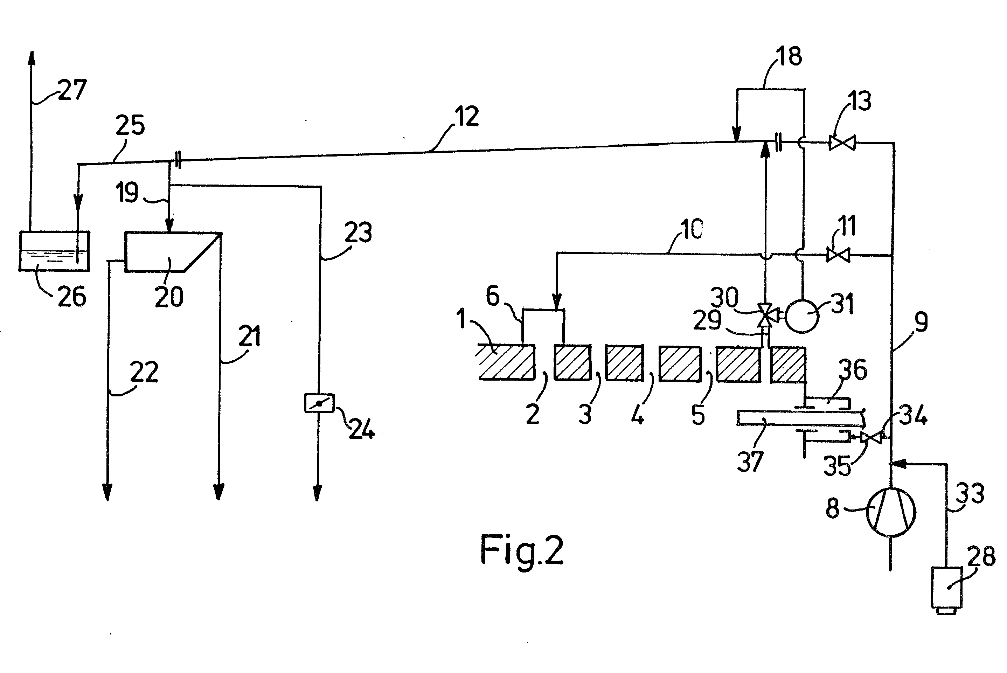

Bei der in Fig. 2 dargestellten Ausführungsform wird die Ofendecke der Koksofenbatterie wiederum mit 1 bezeichnet. In dieser sind die Füllöcher 2 bis 5 angeordnet. Je nach dem Stand des Füllvorganges befindet sich dabei die Absaughaube 6 des nicht näher dargestellten Füllwagens über einem der Füllöcher. In der Abbildung in Fig. 2 ist dies das Füllloch 2. Insgesamt entweichen während des Füllvorganges pro Minute ca. 5 bis 15 Nm³ trockenes Füllgas. Der Füllgasabzug erfolgt in diesem Falle jedoch über das vorhandene Steigrohr 29, das mit einer Umschaltvorrichtung 30 versehen ist. Diese wird während des Abzuges der Füllgase so eingestellt, dass dieselben nicht in die Koksofengasvorlage 31 gelangen können, sondern über die Leitung 32 zur Füllgasleitung 12 strömen. Das für die Inertisierung der Füllgase benötigte Rauchgas wird auch hier vom nicht dargestellten Abhitzekanal der Koksofenbatterie vermittels des Gebläses 8 über die Leitung 9 abgezogen. Es könnte im Bedarfsfalle aber auch in einem separaten Rauchgaserzeuger 28 hergestellt und über die Leitung 33 in die Leitung 9 eingespeist werden. Von dieser zweigt zunächst die Leitung 34 ab, durch die bei entsprechender Stellung des Ventiles 35 Rauchgas über die Planiertür 36 in die Ofenkammer gelangen kann. Das Bezugszeichen 37 markiert dabei die Planierstange. Weiteres Rauchgas kann bei entsprechender Stellung des Ventils 11 über die Leitung 10 abgezogen werden und gelangt damit in die Absaughaube 6 des Füllwagens, so dass sich dort der nötige Rauchgasüberdruck einstellt, durch den während des Füllvorganges ein unnötiges Eindringen von Luft in die Absaughaube 6 vermieden wird. Schliesslich hat die Leitung 9 auch noch Anschluss an die Füllgasleitung 12, so dass das Rauchgas bei entsprechender Stellung des Ventils 13 dem Füllgas auch erst in der Füllgasleitung 12 zugemischt werden kann. Selbstverständlich lässt sich durch eine entsprechende Stellung der Ventile 35, 11 und 13 die Rauchgaszugabe zu den einzelnen Aufgabestellen im gewünschten Umfange verteilen bzw. einregulieren. Zum Zwecke der vollständigen Inertisierung der Füllgase muss die in diesem Falle zugegebene Rauchgasmenge ca. 15 Nm³ Rauchgas pro Nm³ Füllgas betragen. Das sich während des Füllvorganges im Gassammelraum der Koksofenbatterie sammelnde Füllgas wird zusammen mit eventuell vorhandener Luft sowie teilweise verbranntem Füllgas und Rauchgas über das Steigrohr 29 aus dem Gassammelraum der Koksofenkammer abgezogen. Über die Leitung 32 gelangt das Gasgemisch in die Füllgasleitung 12. Die Leitung 32 ist hierbei stationär angeordnet und stellt eine feste Verbindung zwischen dem Steigrohr 29 und der Füllgasleitung 12 dar.

In der Füllgasleitung 12 wird die Temperatur des über die Leitung 32 abgezogenen Gasgemisches durch die Spülwasserzugabe, welche über die Leitung 18 erfolgt, auf etwa 80°C herabgesetzt. Die übrige Weiterbehandlung des Gasgemisches und des Spülwassers entspricht weitgehend der im Zusammenhang mit Fig. 1 beschriebenen Arbeitsweise. Es wird deshalb auf die diesbezüglichen Ausführungen verwiesen, wobei übereinstimmende Bezugszeichen in den Figuren selbstverständlich die gleiche Bedeutung haben.

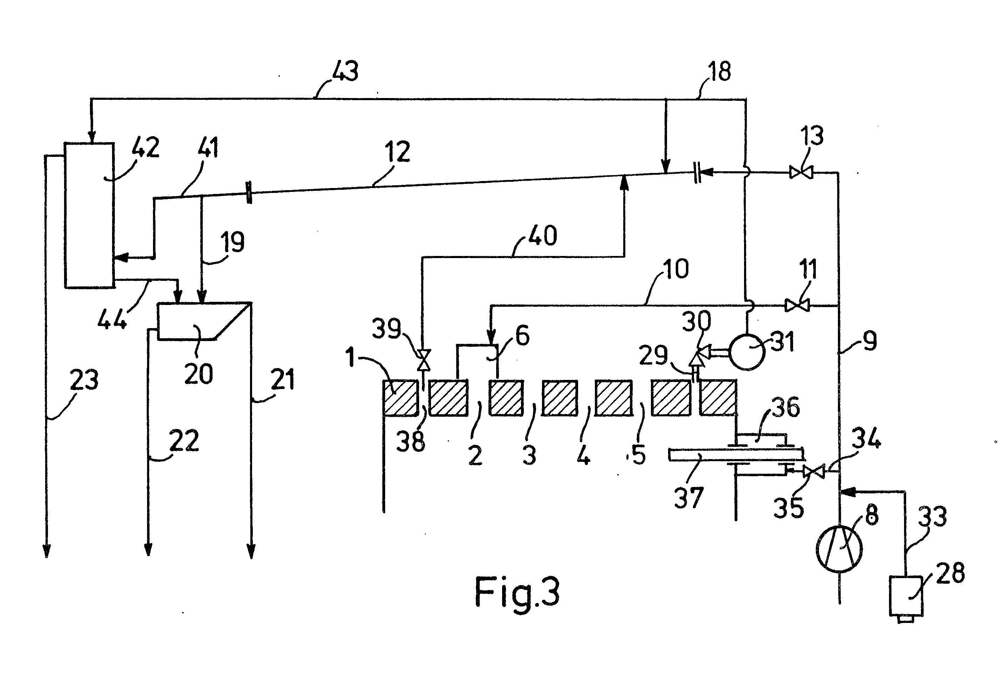

Bei der in Fig. 3 dargestellten Ausführungsform erfolgt der Abzug der Füllgase über eine zusätzliche Öffnung 38 der Ofendecke 1, wobei diese Öffnung 38 über das Ventil 39 und die Leitung 40 mit der Füllgasleitung 12 direkt in Verbindung steht. Während des Abzuges der Füllgase über die Öffnung 38 und die Leitung 40 wird die Koksofengasvorlage 31 durch Betätigen der Umschaltvorrichtung 30 abgesperrt, so dass keine Füllgase in die Koksofengasvorlage 31 gelangen können.

Die Ausführungsform in Fig. 3 betrifft ausserdem eine Verfahrensvariante, bei der das aus der Füllgasleitung 12 abgezogene Füllgas-Rauchgas-Gemisch vor der Zumischung zum rohen Koksofengas zunächst noch einer Nachbehandlung in Form einer Wäsche mit Spülwasser aus der Koksofengasvorlage 31 unterworfen wird. Zu diesem Zwecke gelangt das Gasgemisch aus der Füllgasleitung 12 über die Leitung 41 in den Wascher 42, den es von unten nach oben passiert. Im Gegenstrom dazu wird auf den Wascher 42 Spülwasser in einer Menge von 5 bis 10 Liter/Nm³ Füllgas-Rauchgas-Gemisch aufgegeben. Die Spülwasserzufuhr erfolgt hierbei durch die Leitung 43, welche von der Leitung 18 abzweigt. Der Wascher 42 kann mit üblichen Einbauten versehen sein, wobei das nachbehandelte und gereinigte Gasgemisch am Kopf des Waschers 42 abgezogen wird und über die Leitung 23 zum Rohgasstrom hinter der Koksofengasvorlage 31 gelangt. Das aus dem Wascher 42 ablaufende und mit den aus dem Gas abgeschiedenen Verunreinigungen beladene Spülwasser fliesst währenddessen über die Leitung 44 in den Dickteerscheider 20, in dem es mit dem über das Verbindungsstück 19 zufliessenden teer- und kohlehaltigen Spülwasser aus der Füllgasleitung 12 vereinigt wird. Die Weiterbehandlung im Dickteerscheider 20 erfolgt dann in der bereits beschriebenen Art und Weise, so dass über die Leitung 21 der Dickteer und über die Leitung 22 das Spülwasser und der übrige Teer abgezogen werden. Auch die übrige Behandlung des Füllgases entspricht der im Zusammenhang mit Fig. 1 beschriebenen Arbeitsweise. Selbstverständlich können auch bei der in Fig. 3 beschriebenen Arbeitsweise der in Fig. 1 und 2 dargestellte Tauchtopf 26 nachgeschaltet und in der Leitung 23 die Drosselklappe 24 angeordnet werden, so dass auch in diesem Falle während der Füllpause die Rauchgaszufuhr nicht unterbrochen werden muss.

Zusammenfassend lässt sich feststellen, dass es durch das erfindungsgemässe Verfahren möglich ist, die Füllgasbehandlung unter weitgehender Ausnutzung der bereits vorhandenen Einrichtungen des Koksofengasbehandlungsprozesses durchzuführen. Dadurch sind die Anlage- und Betriebskosten ausserordentlich niedrig, wobei sich das erfindungsgemässe Verfahren gleichzeitig durch eine hohe Betriebssicherheit und Umweltfreundlichkeit auszeichnet.

**Patentansprüche**

1. Verfahren zum Betrieb einer Koksofenbatterie mit waagerechten Kammern, bei dem die während des Füllvorganges entweichenden Füllgase getrennt vom Produktionsgas abgezogen und nach Abscheidung der in ihnen enthaltenen Feststoffteilchen und Teerbestandteile dem rohen Koksofengas zugemischt werden, dadurch gekennzeichnet, dass die Füllgase durch Zumischen von Rauchgas inertisiert, über eine mit Spülwasser aus der Koksofengasvorlage beschickte Füllgasleitung abgezogen werden und anschliessend das resultierende Füllgas-Rauchgas-Gemisch dem rohen Koksofengas hinter der Koksofengasvorlage zugemischt wird, während das aus der Füllgasleitung ablaufende teer- und kohlehaltige Spülwasser in einen Dickteerscheider eingeleitet und nach erfolgter Teerabscheidung zur Koksofengasvorlage zurückgeführt wird.

2. Verfahren nach Anspruch 1, dadurch gekennzeichnet, dass die Rauchgaszufuhr über die Planiertür in die Ofenkammer und/oder in die Absaughaube des Füllwagens und/oder in die Füllgasleitung erfolgt.

3. Verfahren nach den Ansprüchen 1 und 2, dadurch gekennzeichnet, dass das zur Inertisierung der Füllgase benötigte Rauchgas aus dem Abhitzekanal der Koksofenbatterie abgezogen wird.

4. Verfahren nach den Ansprüchen 1 bis 3, dadurch gekennzeichnet, dass die Rauchgasmenge 10 bis 20 Nm³ pro Nm³ Füllgas beträgt.

5. Verfahren nach den Ansprüchen 1 bis 4, dadurch gekennzeichnet, dass die auf die Füllgasleitung aufgegebene Spülwassermenge 10 bis 15 Liter pro Nm³ Füllgas-Rauchgas-Gemisch beträgt.

6. Verfahren nach den Ansprüchen 1 bis 5, dadurch gekennzeichnet, dass das Füllgas-Rauchgas-Gemisch vor der Zumischung zum rohen Koksofengas bis auf eine Temperatur zwischen 40 und 70°C abgekühlt wird.

7. Verfahren nach den Ansprüchen 1 bis 6, dadurch gekennzeichnet, dass das Füllgas-Rauchgas-Gemisch vor der Zumischung zum rohen Koksofengas einer Nachbehandlung in einem mit Spülwasser beaufschlagten Wascher unterworfen wird, wobei zwischen 5 und 10 Liter Spülwasser/Nm³ Gasgemisch auf den Wascher aufgegeben werden.

8. Verfahren nach den Ansprüchen 1 bis 7, dadurch gekennzeichnet, dass für die Teerabscheidung aus dem aus der Füllgasleitung ablaufenden Spülwasser der Dickteerscheider des Koksofengasbehandlungsprozesses mitverwendet wird.

9. Verfahren nach den Ansprüchen 1 bis 8, dadurch gekennzeichnet, dass die Füllgase über eine mit leichtem Gefälle verlegte Andockleitung abgezogen werden, deren Anschluss-Stutzen an die Absaughaube des Füllwagens angeschlossen werden können.

10. Verfahren nach den Ansprüchen 1 bis 8, dadurch gekennzeichnet, dass die Füllgase über das Steigrohr, das in diesem Falle mit einer Umschaltvorrichtung versehen ist, abgezogen werden.

11. Verfahren nach den Ansprüchen 1 bis 8, dadurch gekennzeichnet, dass die Füllgase über eine zusätzliche Öffnung in der Ofendecke der Koksofenbatterie abgezogen werden.

## Claims

1. A method for the operation of coke oven batteries with horizontally disposed chambers, whereby the charging gases, which escape during the charging process, are drawn-off separately from the product gas and after separation of the solid particle and tar constituents present in the charging gases, the latter is admixed to the raw oven gas, characterized in that the charging gases are made inert by admixture of flue gases, then are drawn-off through a charging gas duct which is carrying wash water from the coke oven gas-offtake main and subsequently the resultant charging-gas-flue-gas mixture is admixed to the raw coke oven gas past the gas-offtake main, whilst the wash water drained from the charging gas duct, which is loaded with tar and coal, is passed through a heavy tar separator and after having been freed from its tar content, it is fed back to the coke oven gas-offtake main.

2. A method according to claim 1, characterized in that flue gas is supplied through a leveling door into the oven chamber and/or into the suction hood of the larry car and/or into the charging gas duct.

3. A method according to claims 1 and 2, characterized in that the flue gas, required for rendering inert the charging gases, is drawn-off from the waste-heat duct of the coke oven battery.

4. A method according to anyone of claims 1 to 3, characterized in the flue gas quantity being from 10 to 20 Nm³ per Nm³ charging gas.

5. A method according to anyone of claims 1 to 4, characterized in that the quantity of wash water charged into the charging gas duct is from 10 to 15 litre per Nm³ charging-gas-flue-gas mixture.

6. A method according to anyone of claims 1 to 5, characterized in that the charging-gas-flue-gas mixture is cooled down to temperatures from 40 to 70°C, prior to the admixture to the raw coke oven gas.

7. A method according to anyone of claims 1 to 6, characterized in that the charging-gas-flue-gas mixture is subjected – prior to its admixture to the raw coke oven gas – to an after-treatment in a scrubber charged with wash water, wherein from 5 to 10 litre wash water/Nm³ gas mixture is injected into the scrubber.

8. A method according to anyone of claims 1 to 7, characterized in that the existing heavy tar separator of the coke oven gas treatment process is used for the tar separation from the wash water discharged from the charging gas duct.

9. A method according to anyone of claims 1 to 8, characterized in that the charging gases are drawn-off by a docking duct arranged with a slight gradient and its connecting sockets can be connected to the suction hood of the larry car.

10. A method according to anyone of claims 1 to 8, characterized in that the charging gases are drawn-off through a standpipe which – in this case – is equipped with a change-over device.

11. A method according to anyone of claims 1 to 8, characterized in that the charging gases are drawn off through an additional aperture provided on the coke oven battery roof.

## Revendications

1. Procédé de fonctionnement d'une batterie de fours à coke à chambres horizontales dans lequel on retire du gaz de production les gaz de remplissage qui s'échappent pendant le processus de remplissage et, après avoir séparé les particules solides et les constituants goudronneux qu'ils contiennent, on les mélange au gaz brut de cokerie, procédé caractérisé par le fait que l'on rend inertes les gaz de remplissage en y mélangeant du gaz de fumée, qu'on les retire en passant par un tuyau à gaz de remplissage alimenté en eau de lavage venant du barillet à gaz de cokerie et qu'ensuite, on mélange au gaz brut de cokerie le mélange de gaz de remplissage et de gaz de fumée ainsi obtenu, en aval du barillet à gaz de cokerie, tandis que l'on introduit dans un séparateur de goudron épais l'eau de lavage s'écoulant du tuyau à gaz de remplissage et contenant du goudron et du charbon et qu'après la séparation du goudron, on la ramène au barillet à gaz de cokerie.

2. Procédé selon la revendication 1, caractérisé par le fait que l'amenée de gaz de fumée s'effectue, en passant par la porte de nivellement, à la chambre de four et/ou à la hotte d'aspiration du chariot de remplissage et/ou au tuyau à gaz de remplissage.

3. Procédé selon les revendications 1 et 2, caractérisé par le fait que le gaz de fumée nécessaire pour rendre inertes les gaz de remplissage est retiré du canal à chaleur perdue de la batterie de fours à coke.

4. Procédé selon les revendications 1 à 3, caractérisé par le fait que la quantité de gaz de fumée est de 10 à 20 Nm³ par Nm³ de gaz de remplissage.

5. Procédé selon les revendications 1 à 4, caractérisé par le fait que la quantité d'eau de lavage amenée au tuyau à gaz de remplissage est de 10 à 15 litres par Nm³ de mélange de gaz de remplissage et de gaz de fumée.

6. Procédé selon les revendications 1 à 5, caractérisé par le fait qu'avant de mélanger au gaz brut de cokerie le mélange de gaz de remplissage et de gaz de fumée, on le refroidit jusqu'à une température de 40 à 70°C.

7. Procédé selon les revendications 1 à 6, caractérisé par le fait qu'avant de mélanger au gaz brut de cokerie le mélange de gaz de remplissage et de gaz de fumée, on le soumet à un post-traitement dans un laveur alimenté en eau de lavage, en amenant au laveur 5 à 10 litres d'eau de lavage par Nm³ de mélange gazeux.

8. Procédé selon les revendications 1 à 7, caractérisé par le fait que pour séparer le goudron de l'eau de lavage qui s'écoule du tuyau à gaz de remplissage, on utilise conjointement le séparateur de goudron épais du processus de traitement de gaz de cokerie.

9. Procédé selon les revendications 1 à 8, caractérisé par le fait que l'on retire les gaz de remplissage en passant par un tuyau de raccordement posé avec une légère pente et dont les tubulures de raccordement peuvent être raccordées à la hotte d'aspiration du chariot de remplissage.

10. Procédé selon les revendications 1 à 8, caractérisé par le fait que l'on retire les gaz de remplissage en passant par le tube montant qui est muni, dans ce cas, d'un dispositif de commutation.

11. Procédé selon les revendications 1 à 8, caractérisé par le fait que l'on retire les gaz de remplissage en passant par une ouverture supplémentaire du toit de la batterie de fours à coke.

Fig.1

0 027 872

Fig.2

0 027 872

Fig.3

0 027 872